**Europäisches Patentamt**

(19) **European Patent Office**

**Office européen des brevets**

(11) Veröffentlichungsnummer: **0 125 385**
**B1**

(12) # EUROPÄISCHE PATENTSCHRIFT

(45) Veröffentlichungstag der Patentschrift:
**15.07.87**

(51) Int. Cl.⁴: **H 02 M 1/08,** H 02 M 7/155

(21) Anmeldenummer: **84101095.2**

(22) Anmeldetag: **03.02.84**

(54) **Vorrichtung zur Erzeugung geregelter und/oder einstellbarer Gleichspannungen oder Gleichströme.**

(30) Priorität: **16.04.83 DE 3313949**

(43) Veröffentlichungstag der Anmeldung:
**21.11.84 Patentblatt 84/47**

(45) Bekanntmachung des Hinweises auf die Patenterteilung:
**15.07.87 Patentblatt 87/29**

(84) Benannte Vertragsstaaten:
**AT BE CH DE FR GB IT LI NL SE**

(56) Entgegenhaltungen:
**EP - A - 0 072 022**
**DE - A - 3 213 057**
**US - A - 4 263 557**

(73) Patentinhaber: **Autola Stromrichter GmbH & Co. KG, Am Boksberg 4, D-3203 Sarstedt 1 (DE)**

(72) Erfinder: **Tewesmeier, Werner, Blumestrasse 2, D-3016 Seelze (DE)**

(74) Vertreter: **Eikenberg & Brümmerstedt Patentanwälte, Schackstrasse 1, D-3000 Hannover 1 (DE)**

## Beschreibung

Häufig werden zur Energieversorgung elektronischer Geräte und Anlagen und/oder zur Steuerung von Antrieben, Prozessen usw. geregelte oder auch einstellbare Gleichspannungen und -ströme benötigt. Bei grösseren Leistungen verwendet man zur Erzeugung von Gleichspannungen und -strömen steuerbare Gleichrichter, in denen Thyristoren zum Einsatz kommen. Thyristoren sind steuerbare Ventile, die auch in Durchlassrichtung sperrfähig sind, bei denen jedoch bei in dieser Richtung anliegender Spannung der Zeitpunkt des Stromeinsatzes durch einen Zündvorgang bestimmt werden kann. Die Zündung eines Thyristors erfolgt in der Regel durch einen Zündimpuls, der von einem Zündgerät geliefert wird, wobei der Zeitpunkt der Zündung die Grösse der Spannung bzw. des Stromes bestimmt, der bzw. die an den Verbraucher geliefert wird.

Eine Zündstufe für einen Einphasen-Brückengleichrichter arbeitet folgendermassen. Der zeitliche Einsatz der auf den Beginn einer halben Periode der Netzwechselspannung (Spannungs-Nulldurchgang) bezogenen Zündimpulse (Zündwinkel) bestimmt die Höhe der Gleichspannung. Ein Zündwinkel von 0° elektrisch bedeutet z.B. bei ohmsch-induktiver Belastung des Gleichrichters volle Gleichspannung, ein Zündwinkel von 180° elektrisch bedeutet dagegen Gleichspannung Null. Die zeitlich definierten Zündimpulse werden dabei folgendermassen erzeugt: Ein Impulsgenerator in Form einer Synchronisiertstufe bildet aus der Netzwechselspannung Synchronisierimpulse, die genau den Nulldurchgängen der Wechselspannung entsprechen. Mit diesen Impulsen wird ein Sägezahngenerator getriggert, der eine rampenförmig ansteigende Spannung liefert. In einer Vergleichsschaltung wird diese Spannung mit einer externen Spannung verglichen, die den Zündwinkel des Gerätes und damit den Sollwert der Gleichspannung repräsentiert. Diese Sollgrösse wird normalerweise von einem übergeordneten Regler erzeugt. Bei Gleichheit beider Spannungen löst die Vergleichsschaltung die Erzeugung eines Ansteuerimpulses für den Thyristor aus. Da bei einem Einphasen-Brückengleichrichter jede Halbwelle der Netzspannung von verschiedenen Thyristoren gleichgerichtet wird, ist der Vergleichsschaltung eine weitere Stufe zur Kanalauftrennung nachgeschaltet. Diese wertet die positive und negative Halbwelle der Netzspannung aus und gibt alle 180° elektrisch einen Impuls an die entsprechenden Thyristoren aus.

Für komplexe Steuerungs-, Überwachungs- und Regelungsaufgaben, bei denen eine grosse Menge Daten zu verarbeiten sind, werden in Anlagen oder Geräten häufig Rechner verwendet (Mini- oder Mikrocomputer), da diese gegenüber dem Einsatz von fest verdrahteten analogen Schaltungen erhebliche Vorteile aufweisen, z.B. hinsichtlich der Flexibilität bei Parameteränderungen, hinsichtlich des Schaltungsaufwandes und der Kosten. In solchen Geräten oder Anlagen werden die Sollwerte benötigter Gleichspannungen und -ströme und damit die Zündwinkel von Thyristoren durch die Rechner berechnet und liegen daher in digitaler Form vor. Trotzdem hat man bisher die oben beschriebenen Zündgeräte für Thyristoren in solchen Anlagen und Geräten verwendet, wobei zur Erzeugung des benötigten analogen Sollwertes für das Zündgerät Digital-Analog-Wandler eingesetzt wurden, die die vom Rechner vorgegebene binäre Zahl (Sollwert) in eine entsprechende Spannung umformen.

Diese Methode hat sich zwar seit langem bewährt, jedoch ist sie mit einigen Nachteilen behaftet. So ist für eine genaue Digital-Analog-Wandlung eine sehr genaue Bezugsgrösse erforderlich (entweder Strom oder Spannung), die einen möglichst kleinen Temperaturkoeffizienten haben muss. Derartige Bauteile stehen zwar zur Verfügung, jedoch verursachen sie relativ hohe Kosten. Trotzdem kann es auch beim Einsatz sehr genauer D/A-Wandler infolge mangelnder Langzeitstabilität zu Übertragungsfehlern kommen, die sich negativ auf die Qualität der Regelung auswirken.

Die dem D/A-Wandler nachgeschalteten Baustufen des Zündgerätes der Thyristoren werden in der Regel mit Operationsverstärkern aufgebaut. Auch hier muss mit einer gewissen Temperaturdrift gerechnet werden, die sich negativ auf die Regelung auswirkt. Um gewisse Exemplarstreuungen aktiver oder passiver Bauelemente aufzufangen, und um bestimmte maximale Zündwinkel einzustellen, ist an dieser Stufe in der Regel ein Abgleich erforderlich.

Selbst beim Einsatz analoger, integrierter Schaltungen, die bereits einen grossen Teil der für ein Zündgerät benötigten Bauelemente enthalten, ist zu berücksichtigen, dass als äussere Beschaltung einer integrierten Schaltung passive Bauelemente notwendig sind (z.B. Kondensatoren und Widerstände zur Erzeugung der Rampenfunktion), die aufgrund von Ungenauigkeiten und Exemplarstreuungen die sonst sehr guten Eigenschaften der integrierten Schaltung wieder mindern. Der Einsatz analoger integrierter Schaltungen hat zwar die Fertigungskosten der Zündgeräte gesenkt, doch die immer noch notwendigen passiven Bauelemente lassen Kostensenkungen kaum zu. Ausserdem ist in der Regel auch hier ein Abgleich erforderlich.

Ähnliche Probleme treten auch bei Schaltungen mit Leistungstransistoren auf, die als Stellglieder zur Erzeugung oder Transformation von Gleichspannungen eingesetzt werden. Von diesen sogenannten Schaltreglern existieren viele Varianten, z.B. Sperrwandler, Eintakt- oder Gegentakt-Flusswandler oder auch Brückenwandler, denen allen gemeinsam das Arbeitsprinzip ist, das auf der Erhöhung der Betriebsfrequenz und dem Betreiben von Leistungstransistoren als schnelle Schalter beruht.

Ein Schaltnetzteil z.B. arbeitet folgendermassen: Die Netzspannung wird gleichgerichtet, vom Schaltregler in eine Rechteckspannung umgeformt und auf das gewünschte Spannungsniveau transformiert. Danach wird die Rechteckspannung wieder gleichgerichtet.

Schaltregler arbeiten bei festen Frequenzen im Bereich von 1 kHz bis ca. 100 kHz. Die Einstellung oder Regelung von Strom und Spannung erfolgt über die Impulsbreite des Rechtecksignals, das von einem analogen Regler geliefert wird, und mit dem die Leistungstransistoren angesteuert werden.

Ähnlich wie beim Betrieb von Thyristoren muss auch in diesem Fall ein zeitlich genau definiertes und mit einer fest vorgegebenen Frequenz synchronisiertes Signal erzeugt werden. In Geräten oder Anlagen, in denen derartige Schaltregler eingesetzt werden, und in denen die Regelung und Vorgabe der Sollwerte von einem Digitalrechner erfolgt, wird in der Regel dasselbe Prinzip der Erzeugung der Steuerimpulse verwendet wie bei der Ansteuerung von Thyristoren, nämlich Einsatz der Baugruppen D/A-Wandler – Impulsgenerator zur Erzeugung von Synchronisierimpulsen – Istwertgeber in Form eines Rampengenerators – Vergleichsschaltung.

Obwohl in Schaltreglern in zunehmendem Masse integrierte Schaltungen verwendet werden, die fast alle geforderten Funktionen beinhalten, müssen auch hier weitere passive Bauelemente eingesetzt werden, deren Nachteile oben bereits erwähnt wurden.

Aus der EP-A 72 022 ist eine Schaltung bekannt, die vorzugsweise zur Steuerung des Stroms eines Motors dient, bei der der Umweg über einen analogen Zwischenkreis nicht beschritten wird. Bei dieser bekannten Schaltung wird der analoge Istwert des Stromes durch einen A/D-Wandler in einen digitalen Wert umgeformt. Dieser wird einer Vergleichsschaltung zugeführt, welche den Istwert mit einem digitalen Sollwert vergleicht und so die Regelabweichung ermittelt. Abhängig vom Vergleichsergebnis wird dann die Impulsdauer eines pulsbreitenmodulierten Signals eingestellt, welches über Treiberstufen dem Leistungs-Stellglied (z.B. Leistungstransistoren) zugeführt wird.

Die Erfindung geht aus von einer Vorrichtung zur Erzeugung geregelter und/oder einstellbarer Gleichspannungen oder Gleichströme in einem System mit übergeordnetem Rechner unter Verwendung von Halbleiterelementen in Form von anschnittgesteuerten Thyristoren oder mit einer vorgegebenen Taktfrequenz geschalteten Leistungstransistoren, mit einem Impulsgenerator zur Erzeugung von Synchronisierimpulsen vorgegebener Frequenz, mit einem nach Massgabe des Impulsgenerators gesteuerten Istwertgeber, mit einer binären Schaltung als Sollwertgeber, die die von dem übergeordneten Rechner zur Verfügung gestellten Sollwerte, die ein Mass für die benötigte Gleichspannung bzw. für den benötigten Gleichstrom sind, an ihrem Ausgang als Binärzahl bereitstellt, und mit einer Vergleichsschaltung, die den Vergleich von Soll- und Istwert in binärer Form durchführt und abhängig vom Vergleichsergebnis die Halbleiterelemente ansteuert.

Der Erfindung liegt die Aufgabe zugrunde, eine Vorrichtung der vorgenannten Art so auszubilden, dass wahlweise sowohl die Regelung des Stroms als auch der Spannung mit demselben Istwertgeber möglich ist.

Die gestellte Aufgabe wird gemäss der Erfindung dadurch gelöst, dass als Istwertgeber ein periodisch zurückgestellter Binärzähler dient, der die Taktimpulse des übergeordneten Rechners zählt und bei Beginn der Zählung vom Null-Durchgang der Netzspannung an für den Anschnittwinkel der Thyristoren eine Zahl liefert, die multipliziert mit der Perioden-Dauer der Taktimpulse die seit dem Zählerstart abgelaufene Zeit angibt, und der bei Beginn der Zählung am Beginn der Periode der Taktfrequenz für die Leistungstransistoren eine Zahl liefert, die der gewünschten Dauer der Impulsbreite des pulsbreitenmudolierten Signals entspricht.

Mit der erfindungsgemässen Vorrichtung ist also wahlweise eine Strom- oder Spannungsregelung möglich, ohne dass hierfür Änderungen der Schaltung notwendig sind, sondern die Regelung erfolgt nach einem über Software vorgegebenen Regelalgorithmus.

Die Erfindung wird nachfolgend anhand von in der Zeichnung dargestellten Ausführungsbeispielen näher erläutert. In der Zeichnung bedeuten:

Fig. 1 ein Blockschaltbild der erfindungsgemässen Vorrichtung und

Fig. 2 ein Blockschaltbild der Vorrichtung gemäss Fig. 1 in Verbindung mit einer Batterie-Wartungsschaltung.

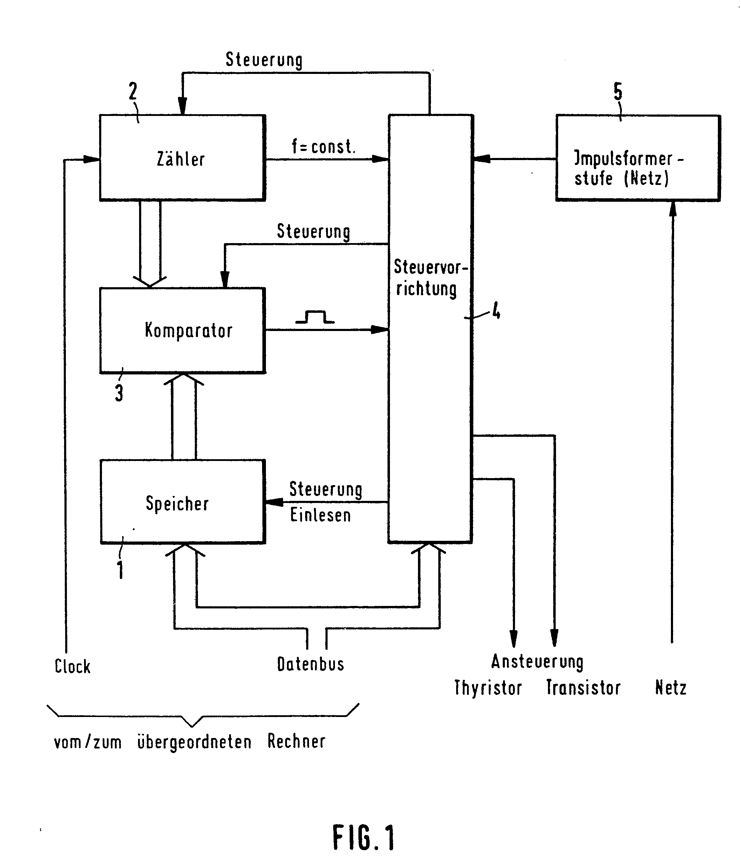

Bei dem in Fig. 1 dargestellten Blockschaltbild werden von einem übergeordneten Rechner die Informationen über den Anschnittwinkel bzw. über die Impulsbreite eines pulsbreitenmodulierten Signals in Form einer sechzehnstelligen Binärzahl in einen digitalen Speicher 1 eingegeben. Zugleich erhält eine Steuervorrichtung 4 über den Datenbus Steuersignale von dem übergeordneten Rechner. Die Steuervorrichtung 4 gibt an den Speicher 1 Befehle weiter, die zur Steuerung des Einlesens der Informationen in den Speicher dienen. Der Speicher stellt die Informationen an seinem Ausgang als Binärzahl zur Verfügung.

Ein sechzehnstufiger Binärzähler 2 erhält als Eingangsgrösse die Takt- oder Clock-Impulse des übergeordneten Rechners und zählt diese. Ausserdem erhält auch der Zähler 2 Steuerbefehle von der Steuervorrichtung 4. Der Zähler stellt an seinem Ausgang eine binäre Zahl dar, die angibt, wieviel Takt- oder Clock-Perioden seit dem Zählerstart vergangen sind. Aus dieser Zahl multipliziert mit der Periodendauer der Taktimpulse erhält man also die seit dem Zählerstart abgelaufene Zeit. Bei digitaler Istwerterzeugung ist es vorteilhaft, die Taktimpulse des übergeordneten Rechners als Eingangsgrösse des Zählers zu verwenden, da damit bereits eine zum System gehörende Bezugsgrösse vorliegt und der Aufbau eines separaten Impulsgenerators entfällt. Zusätzlich liefert der Zähler eine Impulsfolge fest einstellbarer Frequenz, die ein ganzzahliges Teil der Takt- oder Clock-Frequenz ist und als Synchronisiersignal für den Betrieb von Leistungstransistoren dient. Diese Doppelfunktion des Zählers wird bei Bedarf dadurch erreicht, dass ein bestimmter Ausgang des Zählers, abhängig von der benötigten Frequenz, über die Steuervorrichtung mit dem Rückstell-Eingang des Zählers verbunden wird. Die Ausgänge des Speichers 1 und des Zählers 2 werden einer Vergleichsschaltung 3 zugeführt, in der die Zahlen miteinander verglichen werden. Bei Gleichheit beider Zahlen und Vorliegen entsprechender Steuerbefehle wird ein Ausgangs-Flip-Flop der Vergleichsschaltung 3 gesetzt. Der zeitliche Impulsbeginn wird also durch die vom Speicher gelieferte Binärzahl bestimmt. Die Impulslänge wird durch ein Synchronisiersignal festgelegt, welches von der Steuervorrichtung kommt und gleichzeitig das Flip-Flop und den Zähler zurücksetzt. Dadurch beginnt der Zähler wieder bei Null mit der Zählung, die oben beschriebenen Vorgänge wiederholen sich, und es wird ein pulsbreitenmoduliertes Signal erzeugt, dessen Impulslänge durch eine Binärzahl vorgegeben wird, und dessen Periodendauer durch Synchronisierimpulse bestimmter Frequenz festgelegt wird.

Die Steuervorrichtung hat dabei die Aufgabe, die von der Vergleichsschaltung gelieferten Impulse mit der Netzfrequenz oder einer anderen fest vorgegebenen Frequenz zu synchronisieren. Sie wird dazu mit Synchronisiersignalen aus einer Impulsformerstufe 5 und aus dem Zähler versorgt, der eine Impulsfolge fest einstellbarer Frequenz abgibt. Die Impulsformerstufe erzeugt aus der sinusförmigen Netzspannung von 50 Hz eine 100 Hz-Impulsfolge mit 500 ns Impulsdauer. Der Beginn der Impulse entspricht dabei jeweils dem Nulldurchgang der Netzwechselspannung. Diese Impulsfolge wird bei Betrieb von Thyristoren benötigt, während der Betrieb von Transistoren eine höhere Synchronisierfrequenz erfordert. In diesem Falle wird, wie schon erwähnt, der Zähler auch als Impulsgenerator verwendet. Da in der Steuervorrichtung bereits netzsynchrone Signale vorliegen, ist in dieser Baugruppe eine Schaltung untergebracht, die diese Signale zur Kanalauftrennung bei Thyristorbetrieb verwendet. Sie sorgt dafür, dass die einzelnen Thyristoren einer Einphasen-Brückenschaltung dem Netzspannungsverlauf entsprechend angesteuert werden, wie bei der Beschreibung einer herkömmlichen Ansteuerschaltung bereits erläutert wurde.

Die Steuervorrichtung 4 enthält ferner eine Umschalteinrichtung mit Verriegelungsschaltung, um dafür zu sorgen, dass das pulsbreitenmodulierte Signal entweder an die Ansteuerstufe eines Thyristorsatzes oder an die Treiberstufen von Leistungstransistoren weitergeleitet wird. Informationen über die benötigte Frequenz und die anzusteuernde Baugruppe erhält die Steuervorrichtung 4 über den Datenbus. Diese Angaben, die in binärer Form vorliegen, werden dazu benutzt, um zwei separate Flip-Flops zu setzen, von denen das eine bei Transistorbetrieb und das andere bei Thyristorbetrieb eingeschaltet ist. Sobald ein Flip-Flop gesetzt ist, erhält das andere ein Signal, welches ein Setzen dieses Flip-Flops verhindert. Dadurch wird eine gegenseitige Verriegelung beider Flip-Flops erreicht, und es können niemals Thyristoren und Transistoren z.B. aufgrund eines Software-Fehlers gleichzeitig angesteuert werden.

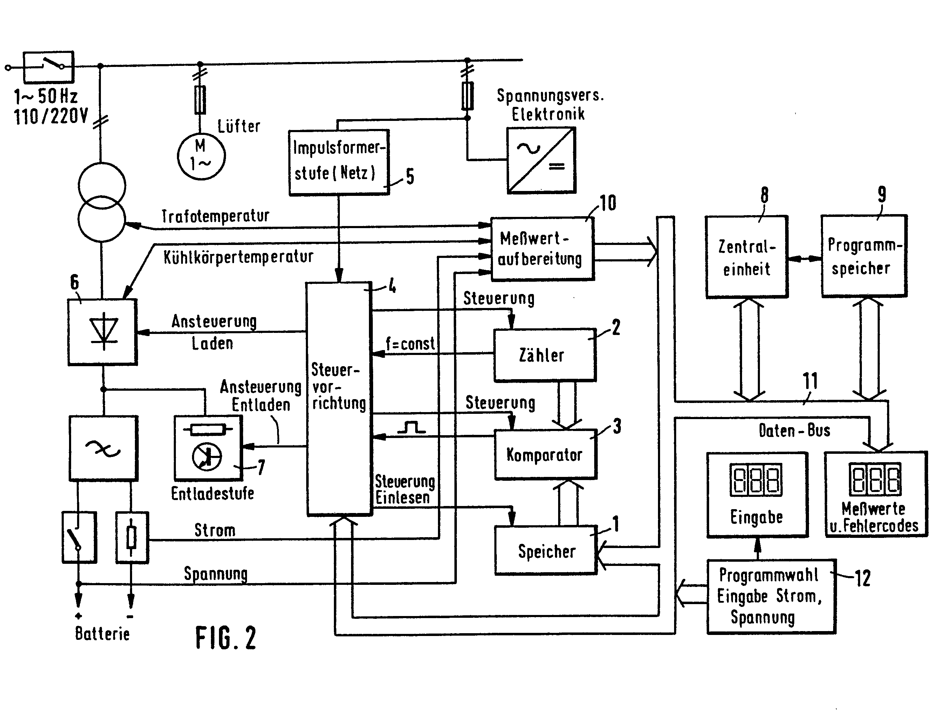

Fig. 2 zeigt die Anwendung der erfindungsgemässen Vorrichtung in einem mikroprozessorgesteuerten Batterie-Wartungsgerät, welches zum Laden und Entladen von Batterien verwendet wird. Es sind hier gleiche Bezugsziffern für gleiche Teile wie in Fig. 1 verwendet. Die Ladeschaltung 6 des Gerätes besteht aus einer halbgesteuerten Einphasen-Gleichrichterbrücke mit Thyristoren, und die Entladeschaltung 7 ist in getakteter Technik als Sperrwandler mit Transistoren aufgebaut.

Die den Mikroprozess enthaltende Zentraleinheit 8 erhält von einem Programmspeicher 9 Befehle über das Laden bzw. Entladen von Batterien und die dabei einzuhaltenden Parameter, und von eingebauten Messeinrichtungen 10 Informationen über den momentanen Wert von Lade- bzw. Entladestrom und die Batteriespannung. Nach Verarbeitung aller Informationen gibt der Mikroprozessor, der in diesem Fall auch als Regler arbeitet, Befehle in binärer Form an die Lade- bzw. Entladestufe 6 bzw. 7 weiter. An einen gemeinsamen Datenbus sind die Zentraleinheit 8, der Programmspeicher 9, die Eingabe 12, der Speicher 1 und die Steuervorrichtung 4 angeschlossen. Die Befehle des Mikroprozessors, die über den Datenbus zur Steuervorrichtung 4 gelangen, enthalten als binäre Werte den Zündwinkel der Thyristoren bzw. Angaben über die Länge von Impulsen zur Ansteuerung der Leistungstransistoren und auch Statusangaben wie z.B. Laden, Entladen oder Verriegelungssignale.

Die Steuervorrichtung 4 verarbeitet die Statusangaben und steuert das Einlesen der Informationen in den Speicher 1. Ausserdem dient die Steuervorrichtung zur Auswahl der benötigten Synchronisiersignale zum Laden bzw. Entladen, die sie entweder vom Zähler 2 oder von der Impulsformerstufe 5 erhält und an den Zähler 2 und die Vergleichsschaltung 3 weitergibt. Der Zähler 2 wird von den Taktimpulsen des Mikroprozessors gespeist. Mit jedem Synchronisierimpuls wird sein 16stelliger Ausgang auf Null gesetzt. Danach zählt er so lange, bis er durch einen erneuten Synchronisierimpuls wieder auf Null gesetzt wird. Der Ausgang des Zählers gibt dann jeweils binär die abgelaufene Zeit seit dem letzten Rücksetzsignal als Vielfaches der Taktzeit an.

Während des Zählvorganges vergleicht die Vergleichsschaltung 3 ständig den Ausgang des Zählers mit der im Speicher 1 enthaltenen Zahl. Bei Gleichheit beider Zahlen gibt die Vergleichsschaltung 3 ein Signal aus, welches ein Flip-Flop setzt, das in der Vergleichsschaltung enthalten ist. Dieses Flip-Flop wird durch die Synchronisierimpulse wieder zurückgesetzt, so dass an seinem Ausgang ein Signal erscheint, das relativ zu den Synchronisierimpulsen nach einer bestimmten Zeit beginnt, die dem Anschnittwinkel von Thyristoren entspricht und eine genau definierte Länge aufweist, die der Impulsbreite zur Ansteuerung von Leistungstransistoren entspricht. Das pulsbreitenmodulierte Signal gelangt an die Steuervorrichtung 4. Diese enthält eine Umschalteinrichtung in Kombination mit einer Verriegelungsschaltung (wie oben beschrieben), um dafür zu sorgen, dass das Signal entweder nur an die Thyristoren oder nur an die Leistungstransistoren weitergeleitet wird. Ausserdem erfolgt für die Ansteuerimpulse der Thyristoren eine Kanaltrennung, so dass jeder Thyristor der halbgesteuerten Gleichrichterbrücke während der ihm zugeordneten Halbwelle der Netzspannung gezündet wird.

Wie bereits erwähnt, gibt der Zähler 2 an seinem Ausgang die abgelaufene Zeit zwischen zwei Synchronisierimpulsen als Vielfaches der Taktzeit des Mikroprozessors an. Das heisst, der Prozessor muss den Ansteuerwinkel von Thyristoren als Vielfaches der Taktzeit berechnen. Auch die Information über die Impulsdauer der Ansteuersignale der Transistoren muss als Vielfaches der Taktzeit vorliegen. Dabei ist aber zu berücksichtigen, dass die Vergleichsschaltung 3 erst nach Ablauf der im Speicher angegebenen Zeit ein Signal abgibt, also wird als Ansteuersignal beim Entladen (Betrieb der Transistoren) das Komplement der einzustellenden Impulsdauer zur Periodendauer der Synchronisierimpulse benötigt, der Prozessor muss also die Dauer der Impulspause als Vielfaches der Taktzeit berechnen. Das ist über entsprechende Schritte im Programm des Mikroprozessors leicht erreichbar.

## Patentansprüche

1. Vorrichtung zur Erzeugung geregelter und/ oder einstellbarer Gleichspannungen oder Gleichströme in einem System mit übergeordnetem Rechner unter Verwendung von Halbleiterelementen in Form von anschnittgesteuerten Thyristoren (6) oder mit einer vorgegebenen Taktfrequenz geschalteten Leistungstransistoren (7), mit einem Impulsgenerator zur Erzeugung von Synchronisierimpulsen vorgegebener Frequenz, mit einem nach Massgabe des Impulsgenerators gesteuerten Istwertgeber (2), mit einer binären Schaltung (1) als Sollwertgeber, die die von dem übergeordneten Rechner zur Verfügung gestellten Sollwerte, die ein Mass für die benötigte Gleichspannung bzw. für den benötigten Gleichstrom sind, an ihrem Ausgang als Binärzahl bereitstellt, und mit einer Vergleichsschaltung (3), die den Vergleich von Soll- und Istwert in binärer Form durchführt und abhängig vom Vergleichsergebnis die Halbleiterelemente (6, 7) ansteuert, dadurch gekennzeichnet, dass als Istwertgeber ein periodisch zurückgestellter Binärzähler (2) dient, der die Taktimpulse des übergeordneten Rechners zählt und bei Beginn der Zählung vom Null-Durchgang der Netzspannung an für den Anschnittwinkel der Thyristoren eine Zahl liefert, die multipliziert mit der Perioden-Dauer der Taktimpulse die seit dem Zählerstart abgelaufene Zeit angibt, und der bei Beginn der Zählung am Beginn der Periode der Taktfrequenz für die Leistungstransistoren eine Zahl liefert, die der gewünschten Dauer der Impulsbreite des pulsbreitenmodulierten Signals entspricht.

2. Vorrichtung nach Anspruch 1, dadurch gekennzeichnet, dass der Binärzähler (2) ein 16stufiger Zähler ist.

3. Vorrichtung nach Anspruch 1 oder 2, dadurch gekennzeichnet, dass der Impulsgenerator zur Erzeugung von Synchronisierimpulsen für den Betrieb von Thyristoren aus einer Impulsformerstufe (5) besteht, die aus der Netzspannung eine 100 Mh-Impulsfolge erzeugt, wobei der Beginn der Impulse jeweils dem Nulldurchgang der Netzwechselspannung entspricht.

4. Vorrichtung nach Anspruch 1 oder 2, dadurch gekennzeichnet, dass der Zähler (2) zusätzlich als Impulsgenerator zur Erzeugung von Synchronisierimpulsen für den Betrieb von Leistungstransistoren dient, indem er eine Impulsfolge konstanter Frequenz abgibt.

5. Vorrichtung nach Anspruch 1 bis 4, dadurch gekennzeichnet, dass diese Teil einer Batterie-Wartungsschaltung bildet, die eine Thyristorschaltung (6) mit Steuerung des zeitlichen Beginns des Anschnittwinkels zum Laden und eine Transistorschaltung (7) mit Steuerung der Impulsbreite des pulsbreitenmodulierten Signals zum Entladen der zu wartenden Batterie enthält.

6. Vorrichtung nach einem der vorhergehenden Ansprüche, dadurch gekennzeichnet, dass die Steuervorrichtung (4) eine Umschalteinrichtung in Kombination mit einer Verriegelungsschaltung enthält, die eine Weiterleitung des Signals entweder nur an die Thyristoren oder nur an die Leistungstransistoren bewirken.

## Revendications

1. Dispositif pour générer des tensions ou courants continus réglés et/ou ajustables dans un système à ordinateur utilisant des éléments semiconducteurs sous la forme de thyristors (6) commandés avec déphasage ou de transistors de puissance (7) commutés à une fréquence d'horloge prédéterminée, comprenant un générateur d'impulsions produisant des impulsions synchronisées à la fréquence prédéterminée, une source de valeur effective (2) commandée suivant la grandeur délivrée par le générateur d'impulsions, un circuit binaire (1), comme source de valeur de consigne, qui prépare à sa sortie comme compte binaire les valeurs de consigne délivrées par l'ordinateur, ces valeurs de consigne étant une grandeur soit pour la tension continue demandée, soit pour le courant continu demandé, et un circuit comparateur (3) qui réalise la comparaison entre les valeurs de consigne et effective sous forme binaire et suivant le résultat de la comparaison commande les éléments semiconducteurs (6, 7), caractérisé en ce que, comme source de valeur effective est prévu un compteur binaire périodique initialisable, qui compte les impulsions d'horloge de l'ordinateur et au début du comptage par passage par zéro de la tension du réseau délivre pour l'angle de déphasage des thyristors un compte qui multiplié par la durée de la période des impulsions d'horloge donne le temps écoulé depuis le démarrage du compteur, et qui au début du comptage au début de la période de la fréquence d'horloge délivre pour les transistors de puissance un compte qui correspond à la durée voulue de la largeur d'impulsion du signal à modulation d'impulsions en durée.

2. Dispositif suivant la revendication 1, caractérisé en ce que le compteur binaire (2) est un compteur à seize étages.

3. Dispositif suivant la revendication 1 ou 2, caractérisé en ce que le générateur d'impulsions de production des impulsions de synchronisation pour le fonctionnement des thyristors est constitué par un étage de mise en forme d'impulsions (5) qui produit à partir de la tension du réseau une suite d'impulsions à 100 Hz de manière que le début des impulsions correspond toujours au passage par zéro de la tension alternative du réseau.

4. Dispositif suivant la revendication 1 ou 2, caractérisé en ce que le compteur (2) sert aussi comme générateur d'impulsions pour la production d'impulsions de synchronisation pour le fonctionnement des transistors de puissance dans lequel il délivre une suite d'impulsions à fréquence constante.

5. Dispositif suivant l'une des revendications 1 à 4, caractérisé en ce que cette partie forme un circuit de surveillance de batterie qui comprend un circuit à thyristors (6) avec commande des débuts temporels des angles de déphasage pour la charge et un circuit à transistors (7) avec commande de la largeur d'impulsion du signal à modulation d'impulsions en durée pour la décharge de la batterie surveillée.

6. Dispositif suivant l'une des revendications précédentes, caractérisé en ce que le dispositif de commande (4) comprend un ensemble de commutation en combinaison avec un circuit de réglage qui actionnent une autre liaison de signal soit seulement vers les thyristors, soit seulement vers les transistors de puissance.

**Claims**

1. A device for the generation of regulated and/or adjustable direct voltages or direct currents in a system with a master computer, wherein semi-conductor elements in the form of ingate angle controlled thyristors (6) or power transistors (7) switched with a predetermined clock frequency are used, with an impulse generator for the generation of synchronizing impulses of prescribed frequency, with an actual-value giver (2) controlled according to provision of the impulse generator, with a binary circuit (1) as desired-value giver that acquires the desired values placed at disposal by the master computer and being a measure for the required direct voltage or for the required direct current at its output as binary number, and with a comparison circuit (3) which performs the comparison of desired value and actual value in binary form and controls the semi-conductor elements (6, 7) in dependence on the comparison result, characterized in that as actual-value giver a periodically reset binary counter (2) is provided, which counts the clock impulses of the master computer, and which delivers at the beginning of the count from the zero crossing of the mains alternating voltage on a number for the ingate angle of the thyristors, which multiplied with the period duration of the clock impulses indicates the time elapsed since the beginning of the count, and which with the beginning of the count at the beginning of the period of the clock frequency delivers a number for the power transistors, which corresponds to the desired duration of the impulse width of the impulse-width modulated signal.

2. A device according to claim 1, characterized in that the binary counter (2) is a 16-stage counter.

3. A device according to claim 1 or 2, characterized in that the impulse generator for the generation of synchronizing impulses for the drive of thyristors consists of an impulse-former stage (5) which generates from the mains voltage a 100 Hz impulse sequence, the beginning of the impulses corresponding in each case to the zero crossing of the mains alternating voltage.

4. A device according to claim 1 or 2, characterized in that the counter (2) serves additionally as impulse generator for the generation of synchronizing impulses for the operation of power transistors, as it gives off an impulse sequence of constant frequency.

5. A device according to claims 1 to 4, characterized in that this forms part of a battery maintenance circuit which contains a thyristor circuit (6) with control of the time beginning of the ingate angle for the charging and a transistor circuit (7) with control of the impulse width of the pulse-width modulated signal for the discharging of the battery to be maintained.

6. A device according to any of the preceding claims, characterized in that the control device (4) contains a switch-over arrangement in combination with a locking circuit, which brings about a conduction onward of the signal either only to the thyristors or only to the power transistors.

FIG.1

FIG. 2